# EUROPÄISCHE PATENTSCHRIFT

(11) **EP 1 048 554 B1**
(45) Veröffentlichungstag und Bekanntmachung des Hinweises auf die Patenterteilung: **15.05.2002**
(21) Anmeldenummer: 00102900.8
(22) Anmeldetag: 12.02.2000
(51) Int. Cl.: B62D 25/08

(54) **Frontend-Modul für eine Fahrzeugkarosserie**
Front module for the bodywork of a motor vehicle
Façade avant modulaire pour la carosserie d'un véhicule automobile

(30) Priorität: 28.04.1999 DE 19919258
(43) Veröffentlichungstag der Anmeldung: 02.11.2000
(73) Patentinhaber: Dr.Ing. h.c.F. Porsche Aktiengesellschaft, 70435 Stuttgart (DE)
(72) Erfinder: Schmid, Markus, 71297 Mönsheim (DE); Baumgärtner, Frank, 76689 Karlsdorf-Neuthard 2 (DE)

(56) Entgegenhaltungen:
- EP-A- 0 658 470
- DE-A- 19 813 162
- DE-C- 4 336 030
- US-A- 5 658 041

## Beschreibung

Die Erfindung betrifft ein Frontend-Modul für eine Fahrzeugkarosserie nach dem Oberbegriff des Patentanspruches 1.

Es sind Frontend-Module für eine Fahrzeugkarosserie bekannt, wobei der die Aggregate aufnehmende Montageträger aus Blechpreßteilen zusammengesetzt ist. Ein derartiger Montageträger zeichnet sich durch ein gutes Crashverhalten aus. Nachteilig ist jedoch, daß der Montageträger infolge der Blechbauweise ein relativ hohes Gewicht aufweist und eine geringe Bauteil-/Aggregatintegration ermöglicht.

Ferner sind Frontend-Module bekannt, bei denen der Montageträger aus Kunststoff gefertigt ist. Solche Montageträger weisen zwar ein geringes Gewicht auf, jedoch ist das Crashverhalten unzureichend.

Die US 5,658,041 A die als nächstliegender Stand Der Technik angesehen wird, offenbart ein Frontend-Modul für eine Fahrzeugkarosserie, das mit wenigstens zwei seitlich gegenüberliegenden Frontenden von Längsträgern der Fahrzeugkarosserie verbindbar ist, wobei das Frontend-Modul einen rahmenförmigen Montageträger zur Aufnahme von Aggregaten umfaßt. Der rahmenförmige Montageträger setzt sich aus zwei aus Metall gefertigten, beabstandet angeordneten Querträgern zusammen, die an ihren seitlich außenliegenden Enden mit vertikal ausgerichteten Stützelementen aus Kunststoff verbunden sind.

Aufgabe der Erfindung ist es, ein einen Montageträger aufweisendes Frontend-Modul für eine Fahrzeugkarosserie so weiterzubilden, daß einerseits bei einem frontseitigen Aufprallstoß ein gutes Crashverhalten erzielt wird und daß andererseits der Montageträger ein relativ geringes Gewicht aufweist und viele Bauteile und Funktionen integriert werden können.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung erzielten Vorteile sind darin zu sehen, daß durch die Ausbildung des Montageträgers aus einem glasfaser- oder glasmattenverstärkten Kunststoff dieser ein geringes Gewicht aufweist und daß ferner durch die Anbringung oder Einbringung von aus Blech gefertigten Versteifungsteilen an hochbelasteten Stellen des Montageträgers durch die Schaffung eines Crashrahmens zugleich ein gutes Deformationsverhalten des Frontend-Moduls bei einem frontseitigen Aufprallstoß erzielt wird. Der aus dem unteren querverlaufenden Stoßfängerträger, den beiden aufrechten mit dem Montageträger verbundenen Versteifungsteilen und dem oberen Schloßquerträger gebildete Crashrahmen sorgt für eine wirkungsvolle großflächige Krafteinleitung in untere und obere Längsträger der Fahrzeugkarosserie.

Die Versteifungsteile wirken quasi als Zugverstrebungen zwischen den oberen und unteren Längsträgern. Durch einfache Demontage des Schloßquerträgers lassen sich die Scheinwerfer und Kühler des Frontend-Moduls ohne Demontage der äußeren Verkleidung einfach aus- und wieder einbauen. Dies ist insbesondere im Kundendienstfall von Vorteil.

Die vorgesehenen Blindnietbuchsen zur Befestigung der Versteifungsteile am Montageträger weisen ein Innengewinde auf, so daß sie zusätzlich zur Befestigung von Anbauteilen nutzbar sind. Die Versteifungsteile aus Blech lassen sich einfach und kostengünstig herstellen.

Die Erfindung ist nachstehend anhand des in den Figuren dargestellten Ausführungsbeispieles näher beschrieben.

Es zeigen
- Fig. 1: ein Frontend-Modul in vormontiertem Zustand sowie die Längsträger der Fahrzeugkarosserie,

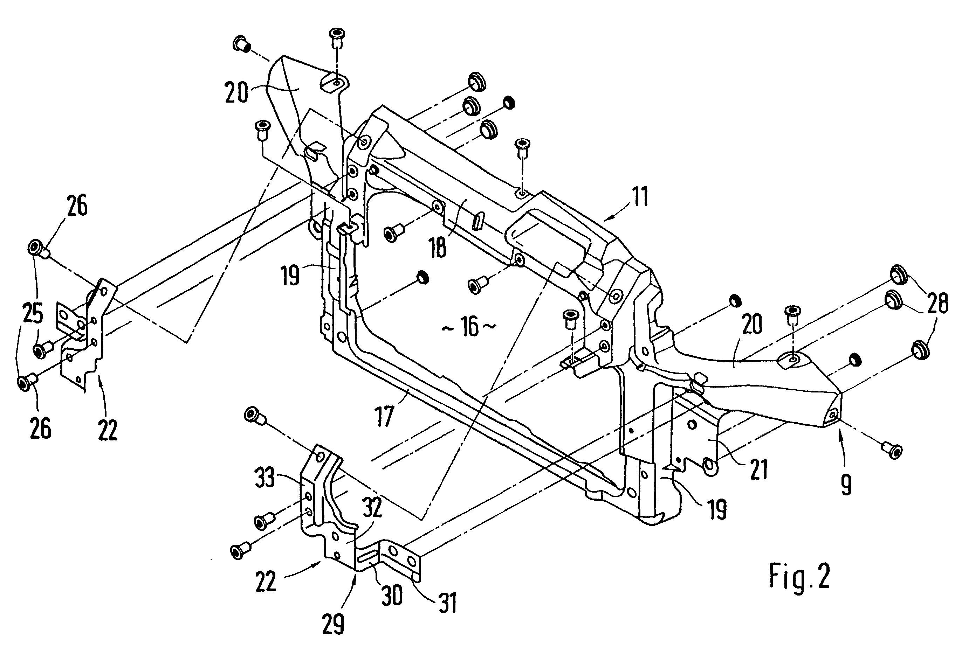

- Fig. 2: eine perspektivische Ansicht von schräg vorne auf den Montageträger des Frontend-Moduls sowie die noch nicht montierten Versteifungsteile,

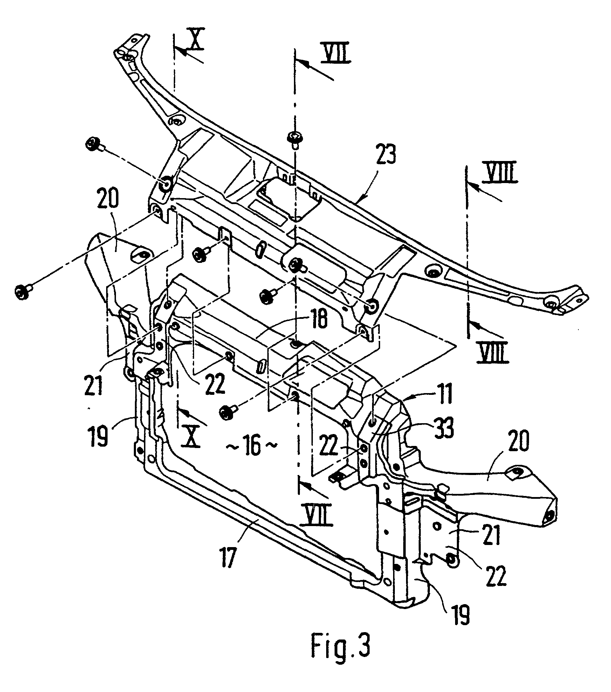

- Fig. 3: eine perspektivische Ansicht von schräg vorne auf den Montageträger mit den montierten Versteifungsteilen sowie den darüberliegenden Schfoßquerträger,

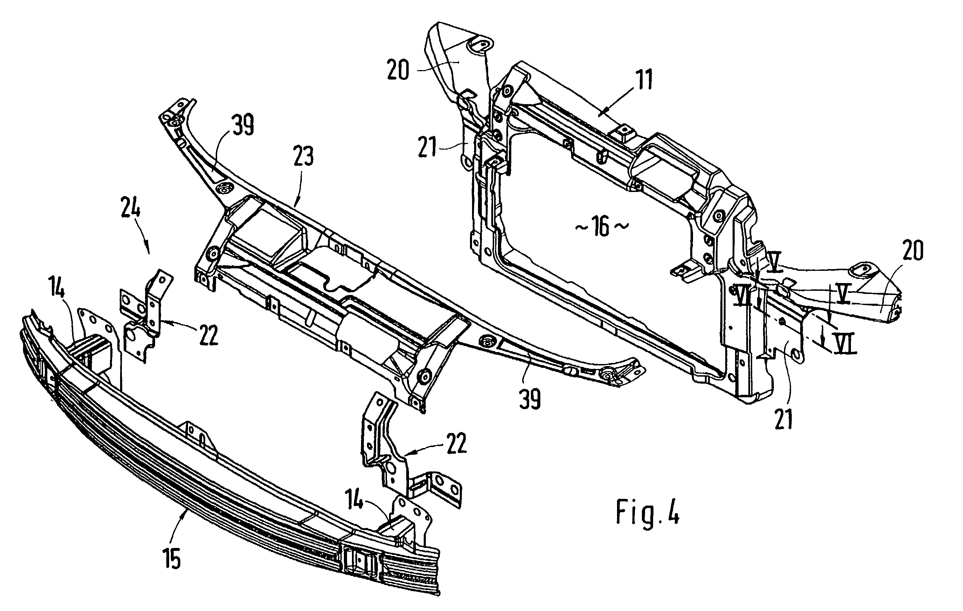

- Fig. 4: eine weitere perspektivische Ansicht von schräg vorne auf das Frontend-Modul,
- Fig. 5: einen Schnitt nach der Linie V-V der Fig. 4,
- Fig. 6: einen Schnitt nach der Linie VI-VI der Fig. 4,
- Fig. 7: einen Schnitt nach der Linie VII-VII der Fig. 3,
- Fig. 8: einen Schnitt nach der Linie VIII-VIII der Fig. 3,
- Fig. 9: einen Schnitt nach der Linie IX-IX der Fig. 1 und
- Fig. 10: einen Schnitt nach der Linie X-X der Fig. 3.

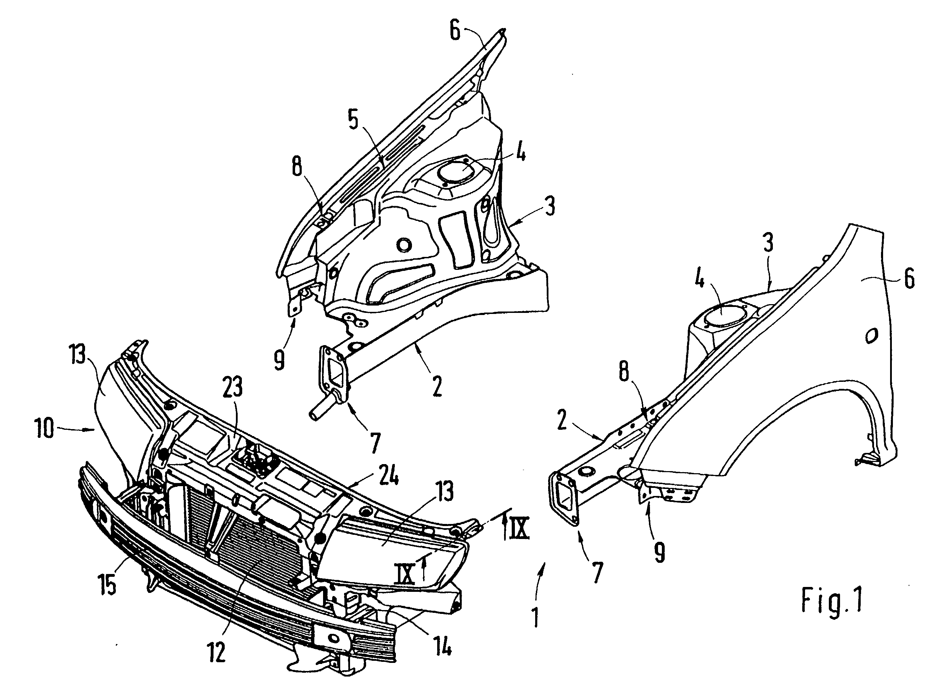

Der in Fig. 1 dargestellte Bugbereich 1 eines nicht näher gezeigten Fahrzeuges umfaßt an beiden Fahrzeuglängsseiten jeweils untere Längsträger 2, daran anschließende Radhauswandungen 3 mit Federbeinaufnahmen 4, obere Längsträger 5 sowie seitliche Kotflügel 6.

An Frontenden 7 (Schottplatten) der beiden unteren Längsträger 2 sowie an weiteren Anschlußpunkten 8, 9 der Fahrzeugkarosserie ist ein vorgefertigtes Frontend-Modul 10 angeschlossen. Die Befestigung des Frontend-Moduls 10 an der Fahrzeugkarosserie erfolgt mittels Befestigungsschrauben. Das Frontend-Modul 10 umfaßt einen rahmenförmigen Montageträger 11, der aus einem glasfaser- oder glasmattenverstärkten Kunststoff hergestellt ist. Der Montageträger 11 kann in Preßtechnik, durch Spritzguß oder in Hybridtechnik gefertigt werden.

Am Montageträger 11 sind zumindest ein Kühler 12, Scheinwerfer 13, ein mit zwei beabstandet angeordneten Prallboxen 14 versehener Stoßfängerträger 15 und ein nicht näher gezeigtes, abschnittsweise den Bugendbereich bildendes äußeres Verkleidungsteil aufgenommen. Der eine großflächige Öffnung 16 umgebende rahmenförmige Montageträger 11 weist obere und untere querverlaufende, etwa horizontal ausgerichtete Rahmenabschnitte 17, 18 sowie zwei seitlich außenliegende aufrechte Rahmenabschnitte 19 auf, wobei die profilierten Rahmenabschnitte 17, 18, 19 einen geschlossenen umlaufenden Rahmen bilden.

Von den seitlichen aufrechten Rahmenabschnitten 19 sind jeweils einstückig ausgebildete, nach außen ragende Arme 20 weggeführt, die an ihren freien außenliegenden Enden bei 9 mit dem angrenzenden seitlichen Kotflügel 6 durch Schrauben oder dergleichen verbunden sind. Unterhalb der beiden Arme 20 sind an jedem seitlichen Rahmenabschnitt 19 querverlaufende plattenförmige Abschnitte 21 ausgebildet. Bei Bedarf kann der Freiraum unterhalb der Arme 20 für die Anbindung weiterer Aggregate genutzt werden.

Erfindungsgemäß ist der Montageträger 11 an hochbelasteten Stellen mit aufgesetzten oder eingesetzten, am Montageträger 11 befestigten Versteifungsteilen 22 aus Blech versehen, wobei Endbereiche der mit dem Montageträger 11 verbundenen Versteifungsteile 22 einerseits an einen untenliegenden Stoßfängerträger 15 und andererseits an einen aufgesetzten obenliegenden Schloßquerträger 23 angeschlossen sind. Der Stoßfängerträger 15, die Versteifungsteile 22 und der Schloßquerträger 23 bilden einen Crashrahmen 24, der sowohl an die unteren Längsträger 2 als auch an die oberen Längsträger 5 der Fahrzeugkarosserie angebunden ist. Am Montageträger 11 sind zwei beabstandet angeordnete profilierte Versteifungsteile 22 vorgesehen, wobei jedes Versteifungsteil 22 durch mehrere Nietverbindungen 25 mit dem Montageträger 11 verbunden ist. Die Versteifungsteile 22 könnten jedoch auch bereits im Herstellungsprozeß des Montageträgers 11 integriert werden.

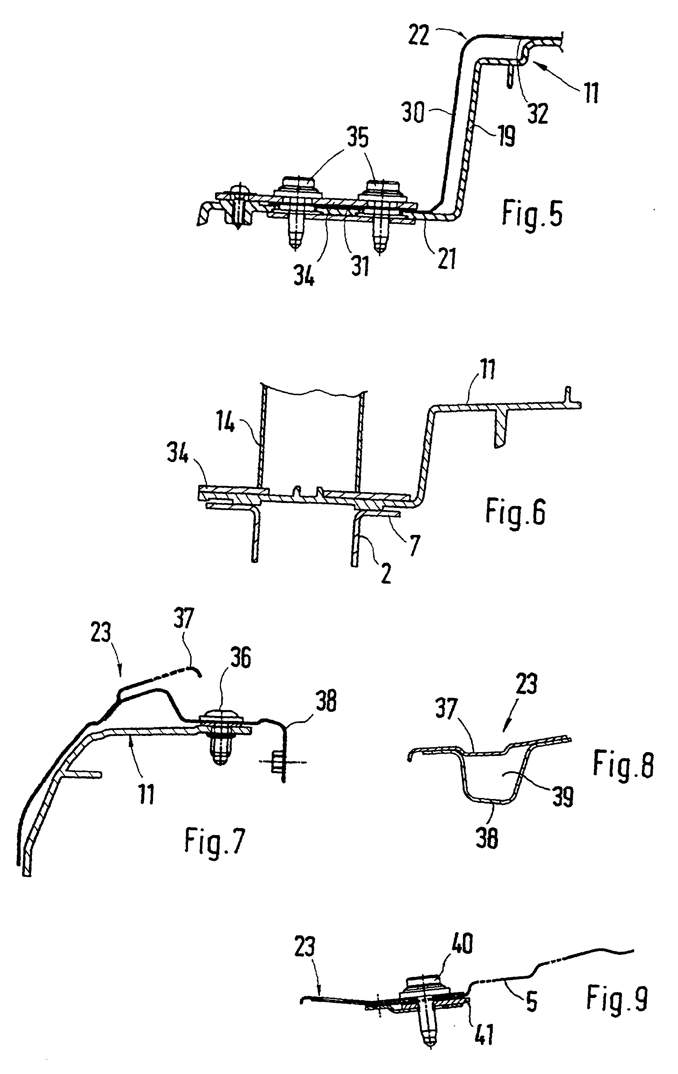

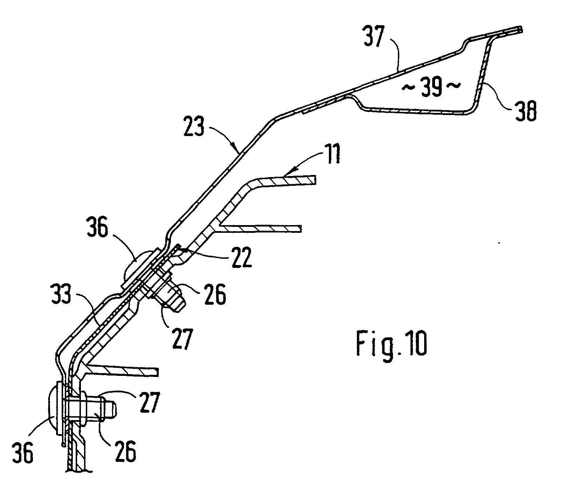

Im Ausführungsbeispiel werden zur Festlegung der Versteifungsteile 22 am Montageträger 11 örtlich Blindnietbuchsen 26 verwendet, die mit einem Innengewinde 27 versehen sind, so daß an den Blindnietbuchsen 26 zusätzliche Anbauteile mittels eingedrehter Schrauben 36 festlegbar sind (Fig. 10). Örtlich erfolgt die Festlegung der Versteifungsteile 22 am Montageträger 11 durch umgebördelte Lochverstärkungen 28. Jedes Versteifungsteil 22 umfaßt einen winkelförmig profilierten Mittelabschnitt 29, wobei vom längsgerichteten äußeren Schenkel 30 eine querverlaufende, nach außen hin gerichtete Abstellung 31 und vom querverlaufenden Schenkel 32 eine nach oben hin gerichtete profilierte Anformung 33 weggeführt sind. Der profilierte Mittelabschnitt 29 des Versteifungsteiles 22 liegt im Ausführungsbeispiel an einer Vorderseite und an einer Außenseite des aufrechten Rahmenabschnitts 19 des Montageträgers 11 an und zwar unterhalb des seitlichen Armes 20. Das Versteifungsteil 22 könnte jedoch auch an der Rückseite des Montageträgers 11 anliegen. Die querverlaufende äußere Abstellung 31 des Versteifungsteiles 22 stützt sich am dahinterliegendenn plattenförmigen Abschnitt 21 des Montageträgers 11 ab und ist mit einer vorgelagerten endseitigen Befestigungsplatte 34 der zwischengeschalteten Prallbox 14 des Stoßfängerträgers 15 durch Befestigungsschrauben 35 kraftübertragend verbunden. Die Rückseite des plattenförmigen Abschnitts 21 liegt am Frontende 7 des angrenzenden unteren Längsträgers 2 an (Fig. 5).

Auf der nach oben hin gerichteten Anformung 33 des Versteifungsteiles 22 liegt der Schloßquerträger 23 örtlich auf und ist mit dem Versteifungsteil 22 bzw. dem Montageträger 11 lösbar verbunden, z.B. durch Befestigungsschrauben 36. Der Schloßquerträger 23 könnte auch über nicht lösbare Befestigungselemente mit dem Montageträger 11 bzw. den Versteifungsteilen 22 verbunden sein. Der Schloßquerträger 23 wird im Ausführungsbeispiel durch zwei profilierte Blechpreßteile 37, 38 gebildet, die zumindest bereichsweise einen querverlaufenden geschlossenen Hohlträger 39 bilden. Die beiden Blechpreßteile 37, 38 sind am gemeinsamen Verbindungsbereich durch Punktschweißen, Kleben oder dergleichen miteinander verbunden (Fig. 8). Ferner könnte der Schloßquerträger 23 auch in einschaliger Bauweise gefertigt werden. Der Schloßquerträger 23 ist an seinen beiden außenliegenden Enden auf darunterliegende obere Längsträger 5 der Fahrzeugkarosserie aufgesetzt und mit diesen durch Befestigungsschrauben 40 lösbar verbunden. Die Befestigungsschrauben 40 sind von oben her in Gewindeplatten 41 der oberen Längssträger eingedreht (Fig. 9).

Zwischen den Armen 20 des Montageträgers 11 und beabstandet angeordneten querverlaufenden Hohlträgern 39 des Schloßquerträgers 23 sind jeweils Einbauräume für die Scheinwerfer 13 vorgesehen.

## Patentansprüche

1. Frontend-Modul (10) für eine Fahrzeugkarosserie, das mit wenigstens zwei seitlich gegenüberliegenden Frontenden (7) von Längsträgern (2, 5) der Fahrzeugkarosserie verbindbar ist, wobei das Frontend-Modul (10) einen rahmenförmigen zumindest bereichsweise aus Kunststoff gefertigten Montageträger (11) zur Aufnahme von Aggregaten umfaßt, **dadurch gekennzeichnet, daß** der gesamte Montageträger (11) aus Kunststoff gefertigt ist und an hochbelasteten Stellen mit aufgesetzten oder eingesetzten, am Montageträger (11) befestigten Versteifungsteilen (22) aus Blech versehen ist, wobei Endbereiche der mit dem Montageträger (11) verbundenen Versteifungsteile (22) einerseits an einen untenliegenden Stoßfängerträger (15) und andererseits an einen aufgesetzten obenliegenden Schloßquerträger (23) angeschlossen sind, wobei der Stoßfängerträger (15), die Versteifungsteile (22) und der Schloßquerträger (23) einen an untere Längsträger (2) und obere Längsträger (5) der Fahrzeugkarosserie angebundenen Crashrahmen (24) bilden.

2. Frontend-Modul nach Anspruch 1, **dadurch gekennzeichnet, daß** der Montageträger (11) aus einem glasfaser- oder glasmattenverstärkten Kunststoff gefertigt ist.

3. Frontend-Modul nach Anspruch 1, **dadurch gekennzeichnet, daß** am Montageträger (11) zwei beabstandet angeordnete profilierte Versteifungsteile (22) vorgesehen sind, wobei jedes Versteifungsteil (22) durch mehrere Nietverbindungen (25) mit dem Montageträger (11) verbunden ist.

4. Frontend-Modul nach Anspruch 3, **dadurch gekennzeichnet, daß** jede Nietverbindung (25) eine in eine Öffnung des Versteifungsteiles (22) eingesetzte Blindnietbuchse (26) umfaßt, die sich mit einem Kragen an der Außenseite des Versteifungsteiles (22) abstützt.

5. Frontend-Modul nach einem der vorhergehenden Ansprüche, **dadurch gekennzeichnet, daß** jedes Versteifungsteil (22) einen winkelförmig profilierten Mittelabschnitt (29) aufweist, wobei vom längsgerichteten äußeren Schenkel (30) eine querverlaufende, nach außen hin gerichtete Abstellung (31) und vom querverlaufenden Schenkel (32) eine nach oben hin gerichtete profilierte Anformung (33) weggeführt sind.

6. Frontend-Modul nach Anspruch 5, **dadurch gekennzeichnet, daß** die unterhalb eines seitlichen Armes (20) des Montageträgers (11) sich erstreckende querverlaufende Abstellung (31) an einen dahinterliegenden plattenförmigen Abschnitt (21) des Montageträgers (11) anliegt und daß die Abstellung (31) mit einer vorgelagerten endseitigen Befestigungsplatte (34) einer zwischengeschalteten Prallbox (14) des Stoßfängerträgers (15) kraftübertragend verbunden ist.

7. Frontend-Modul nach Anspruch 5, **dadurch gekennzeichnet, daß** der Schloßquerträger (23) auf der nach oben hin gerichteten Anformung (33) des Versteifungsteiles (22) örtlich aufliegt und mit dem Versteifungsteil (22) bzw. dem Montageträger (11) verbunden ist.

8. Frontend-Modul nach einem der vorhergehenden Ansprüche, **dadurch gekennzeichnet, daß** der Schloßquerträger (23) durch zwei profilierte Blechpreßteile (37, 38) gebildet wird, die zumindest bereichsweise einen querverlaufenden geschlossenen Hohlträger (39) bilden.

9. Frontend-Modul nach einem der vorhergehenden Ansprüche, **dadurch gekennzeichnet, daß** der Schloßquerträger (23) an seinen beiden freien Enden mit oberen Längsträgern (5) der Fahrzeugkarosserie lösbar verbunden ist.

## Claims

1. A front end module (10) for a vehicle body, which front end module can be connected to at least two laterally opposed front ends (7) of longitudinal supports (2, 5) of the vehicle body, wherein the front end module (10) comprises a frame-shaped assembly support (11) produced at least in part from plastics material for receiving units, **characterized in that** the entire assembly support (11) is produced from plastics material and is provided at highly stressed points with attached or inserted reinforcement parts (22) of metal sheet secured to the assembly support (11), wherein end regions of the reinforcement parts (22) connected to the assembly support (11) are attached at one end to a bumper support (15) situated therebelow and at the other end to a mounted transverse lock support (23) situated thereabove, wherein the bumper support (15), the reinforcement parts (22) and the transverse lock support (23) form a crash frame (24) connected to the lower longitudinal support (2) and the upper longitudinal support (5) of the vehicle body.

2. A front end module according to Claim 1, **characterized in that** the assembly support (11) is produced from a glass-fibre- or glass-mat-reinforced plastics material.

3. A front end module according to Claim 1, **characterized in that** two spaced and profiled reinforcement parts (22) are provided on the assembly support (11), wherein each reinforcement part (22) is connected to the assembly support (11) by a plurality of rivet connexions (25).

4. A front end module according to Claim 3, **characterized in that** each rivet connexion (25) comprises a blind-rivet bush (26) inserted in an opening in the reinforcement part (22) and supported by a collar on the outside of the reinforcement part (22).

5. A front end module according to one of the preceding Claims, **characterized in that** each reinforcement part (22) has a middle portion (29) with an angled profile, wherein a transversely extending and outwardly directed projection (31) extends away from the longitudinally directed outer arm (30) and an upwardly directed and profiled integrally moulded portion (33) extends away from the transversely extending arm (32).

6. A front end module according to Claim 5, **characterized in that** the transversely extending projection (31) extending below a lateral arm (20) of the assembly support (11) rests against a plate-shaped portion (21) of the assembly support (11) situated therebehind, and the projection (31) is connected in a force-transmitting manner to a fastening plate (34) - mounted in front - at the end of an interposed impact box (14) of the bumper support (15).

7. A front end module according to Claim 5, **characterized in that** the transverse lock support (23) rests locally on the upwardly directed integrally moulded portion (33) of the reinforcement part (22) and is connected to the reinforcement part (22) and the assembly support (11) respectively.

8. A front end module according to one of the preceding Claims, **characterized in that** the transverse lock support (23) is formed by two profiled pressed parts (37, 38) of metal sheet forming at least in part a closed hollow support (39) extending transversely.

9. A front end module according to one of the preceding Claims, **characterized in that** the transverse lock support (23) is detachably connected at the two free ends thereof to upper longitudinal supports (5) of the vehicle body.

## Revendications

1. Module d'extrémité frontale (10) pour une carrosserie de véhicule qui peut être relié à au moins deux extrémités frontales (7) opposées latéralement de longerons (2, 5) de la carrosserie du véhicule, le module d'extrémité avant (10) comprenant un support de montage (11) en forme de cadre, réalisé en matière plastique, au moins par endroits, destiné à recevoir des groupes, **caractérisé en ce que** l'ensemble du support de montage (11) est réalisé en matière plastique et est pourvu, en des emplacements très sollicités, de raidisseurs (22) en tôle rapportés ou insérés, fixés au support de montage (11), des zones terminales des raidisseurs (2) reliés au support de montage (11), étant raccordées d'une part à un support de pare-chocs (15) situé à la partie inférieure et d'autre part à une traverse de serrure (23) rapportée, située à la partie supérieure, le support de pare-chocs (15), les raidisseurs (22) et la traverse de serrure (23) formant un cadre de collision (24) attaché à des longerons inférieurs (2) et des longerons supérieurs (5) de la carrosserie du véhicule.

2. Module d'extrémité frontale selon la revendication 1, **caractérisé en ce que** le support de montage (11) est fabriqué dans une matière plastique renforcée aux fibres de verre ou par un mat de verre.

3. Module d'extrémité frontale selon la revendication 1, **caractérisé en ce que** sur le support de montage (11) sont prévus deux raidisseurs (22) profilés, disposés à distance l'un de l'autre, chaque raidisseur (22) étant relié au support de montage (11) par plusieurs liaisons rivetées (25).

4. Module d'extrémité frontale selon la revendication 3, **caractérisé en ce que** chaque liaison rivetée (25) comprend une douille de rivet borgne (26) insérée dans une ouverture du raidisseur (22), laquelle prend appui, par une collerette, contre le côté extérieur du raidisseur (22).

5. Module d'extrémité frontale selon l'une des revendications précédentes, **caractérisé en ce que** chaque raidisseur (22) comporte une partie centrale (29) profilée en forme de cornière, de la branche extérieure (30) orientée longitudinalement partant une partie déviée (31) s'étendant transversalement et orientée vers l'extérieur, et de la branche (32) s'étendant transversalement partant une partie venue de moulage (33) profilée, dirigée vers le haut.

6. Module d'extrémité frontale selon la revendication 5, **caractérisé en ce que** la partie déviée (31) transversale s'étendant au-dessous d'un bras latéral (20) du support de montage (11), s'applique contre une partie (21) en forme de plaque, située derrière, du support de montage (11), et **en ce que** la partie déviée (31) est reliée, de manière à transmettre les efforts, à une plaque de fixation (34) terminale placée devant d'une boîte de rebondissement (14) intercalée du support de pare-chocs (15).

7. Module d'extrémité frontale selon la revendication 5, **caractérisé en ce que** la traverse de serrure (23) repose localement sur la partie venue de moulage (33), dirigée vers le haut, du raidisseur (22) et est reliée au raidisseur (22), ou au support de montage (11).

8. Module d'extrémité frontale selon l'une des revendications précédentes, **caractérisé en ce que** la traverse de serrure (23) est formée par deux éléments (37, 38) profilés en tôle estampée, qui forment, au moins par endroits, une poutre creuse (39) fermée s'étendant transversalement.

9. Module d'extrémité frontale selon l'une des revendications précédentes, **caractérisé en ce que** la traverse de serrure (23) est reliée de manière amovible à ses deux extrémités libres, à des longerons (5) supérieurs de la carrosserie du véhicule.
